Europäisches Patentamt

(19) European Patent Office

Office européen des brevets

(11) **EP 0 644 677 B1**

(12) **EUROPEAN PATENT SPECIFICATION**

(45) Date of publication and mention
of the grant of the patent:
**03.04.2002 Bulletin 2002/14**

(51) Int Cl.[7]: **H04L 25/03**

(21) Application number: **94202629.5**

(22) Date of filing: **13.09.1994**

(54) **Equalizer - matched filter combination**

Zusammensetzung von Entzerrer und angepasstem Filter

Combinaison d'égalisateur et de filtre apparié

(84) Designated Contracting States:
**DE FR GB IT**

(30) Priority: **16.09.1993 BE 9300970**

(43) Date of publication of application:
**22.03.1995 Bulletin 1995/12**

(73) Proprietor: **Koninklijke Philips Electronics N.V.
5621 BA Eindhoven (NL)**

(72) Inventors:
• **Russell, Mark Alan
NL-5656 AA Eindhoven (NL)**
• **Sluijter, Robert Johannes
NL-5656 AA Eindhoven (NL)**
• **Bergmans, Johannes Wilhelmus Maria
NL-5656 AA Eindhoven (NL)**

(74) Representative:
**Deguelle, Wilhelmus Hendrikus Gerardus et al
INTERNATIONAAL OCTROOIBUREAU B.V.,
Prof. Holstlaan 6
5656 AA Eindhoven (NL)**

(56) References cited:
**US-A- 4 864 590**

• **NTZ ARCHIV, vol.8, no.2, February 1986, BERLIN DE pages 35 - 38 DIPPOLD & BIEBL 'Realisierungsgrenzen der entscheidungsabhängigen Impulsentzerrung für hohe Bitraten'**

**Description**

The invention relates to a transmission system which comprises a transmitter for applying a signal representing digital symbols to a channel and comprises a receiver for receiving an output signal from the channel, which receiver comprises determining means for determining a detection signal from a combination of an auxiliary signal derived from the input signal of the receiver and a feedback signal, a detector for determining detected symbol values from the detection signal and feedback means for determining the feedback signal from the detected symbol values.

The invention likewise relates to a receiver for such a system.

A system as defined in the opening paragraph is known from United States Patent 4,864,590.

Transmission systems of this type may be used, for example, for digital symbol transfer through the public telephone network or for reconstituting digital symbols coming from a magnetic tape or disc.

When digital symbols are transmitted *via* a transmission medium or stored on a recording medium respectively, the symbols to be transmitted or recorded are converted to a signal representing the digital symbols. This generally happens in the form of analog pulses which are successively applied to the transmission medium or recording medium respectively, further to be referenced by the term of channel. On the output of the channel analog pulses are present from which the value of the transmitted symbols can be determined by means of a detector. The detector may comprise a simple comparator, but it is likewise conceivable that the detector is arranged as an MLSE (Maximum Likelihood Sequence Estimation) detector. An example of an MLSE detector is a Viterbi detector.

In addition to the (desired) analog pulses, there is nearly always an (undesired) noise signal present on the output of the channel. Due to the presence of this noise signal, the detector will occasionally make erroneous decisions about the value of the transmitted symbols. The probability of erroneous decisions increases as the power of the noise signal increases. Some channels have a larger bandwidth than is necessary for transmitting the analog pulses and, besides, have a spectral power density of the noise signal that increases with frequency. The ratio of the actual bandwidth of the channel and the bandwidth necessary for transmitting the analog pulses is referenced the excess bandwidth. In such channels the signal-to-noise ratio of the output signal of the channel is lower as the excess bandwidth is higher. With a high excess bandwidth the transmission system will generally present a relatively high probability of erroneous decisions due to the relatively low signal-to-noise ratio.

To reduce this probability of erroneous decisions, the receiver of the transmission system of said United States Patent reduces the power of the noise signal on the input of the detector by means of a low-pass filter. This low-pass filter, which has a limited bandwidth, causes the received pulses to overlap, which in many cases will lead to the fact that the detector input signal not only depends on a single data symbol at a given instant but also on symbols adjacent in time. This effect is called intersymbol interference. The presence of intersymbol interference will in many cases lead to an enhancement of the symbol error rate.

To reduce the intersymbol interference caused by the low-pass filter, a decision feedback intersymbol interference canceller is used in the transmission system known from said United States Patent. In this canceller a compensation signal is generated from detected symbol values by means of the feedback means. This compensation signal is subtracted from the auxiliary signal on the output of the low-pass filter. The compensation signal is an estimate of the trailing intersymbol interference caused by the low-pass filter. The impulse response of the feedback means is selected such that the output signal is equal to the trailing intersymbol interference caused by the low-pass filter.

Prior-art transmission system thus requires two additional filters to reduce the erroneous decision probability so that the complexity of the transmission system is thus increased.

It is an object of the invention to provide a transmission system as defined in the opening paragraph, but of which the complexity is reduced.

For this purpose, the invention is characterized in that the determining means for determining the detection signal comprise a predetection filter for deriving the detection signal from the combination of the auxiliary signal and the feedback signal.

By including a predetection filter directly upstream of the filter, the function of the low-pass filter and a considerable part of the function of the feedback means may be realized with a single filter *i.e.* the predetection filter.

To fully compensate for the intersymbol interference introduced by the low-pass filter in prior-art transmission system, the impulse response of the feedback filter is to be equal to the trailing part of the impulse response of the low-pass filter. This requires filters which are accurately alike, which in analog filters is hard to realize. An additional advantage of the transmission system according to the invention is that these requirements of likeness may be dropped, because the functions of the low-pass filter and the feedback filter are carried out by a single filter.

There is observed that in the journal article "Decision Feedback Equalisation" by C.A. Belfiore and J.H. Park in Proceedings of the IEEE, vol. 67, no. 8, August 1979, an alternative transmission system was published, in which a difference between the detection signal and the detector output signal, which difference has been found by a feedback filter, is subtracted from the detection signal. This method may be considered a subtraction of an estimable portion of the noise signal on the output of the channel from the detection signal before the detection signal is applied to the detector. Such an arrangement also needs only a single filter. A first disadvantage of this alternative transmission system is that this transmission system cannot be realised under all circumstances, as is discussed in Belfiore's and Park's journal article. In addition, it is necessary that for determining the difference between the detection signal and the detector output signal the two signals have undergone an equally long delay. In an analog implementation of the receiver this is hard to realize, so that the use of an analog feedback filter in the alternative transmission system is less attractive.

An embodiment of the invention is characterized in that the feedback means comprise a feedback filter.

By including another feedback filter in the feedback means it is possible to compensate not only for the intersymbol interference caused by the reduction of the noise signal power, but also the intersymbol interference caused by a limited bandwidth of the channel or by filtering in the transmitter of the pulses transmitted by this transmitter.

A further embodiment of the invention is characterized in that the feedback means are arranged for producing at least two feedback signals, in that the determining means for determining the detection signal comprise at least two parallel branches each of the branches being arranged for combining the auxiliary signal with one of the feedback signals, in that each of the branches comprises a sub-predetection filter for filtering the combination of the auxiliary signal and the feedback signal concerned, and in that the determining means for determining the detection signal comprise combining means for combining the output signals of the branches to the detection signal.

By arranging the predetection filter as at least two sub-predetection filters whose output signals are combined, and by forming each of the input signals of the sub-predetection filters from the auxiliary signal and its own feedback signal, a simple implementation is obtained for predetection filters having a transfer function of an order higher than 1.

The invention will now be further explained with reference to the drawing Figures in which:

Figures 1 and 2 show embodiments of a transmission system according to the invention;
Figures 3-6 show waveforms by means of which the operation of a transmission system according to the invention will be explained;
Figures 7 and 8 show embodiments of a receiver according to the invention;

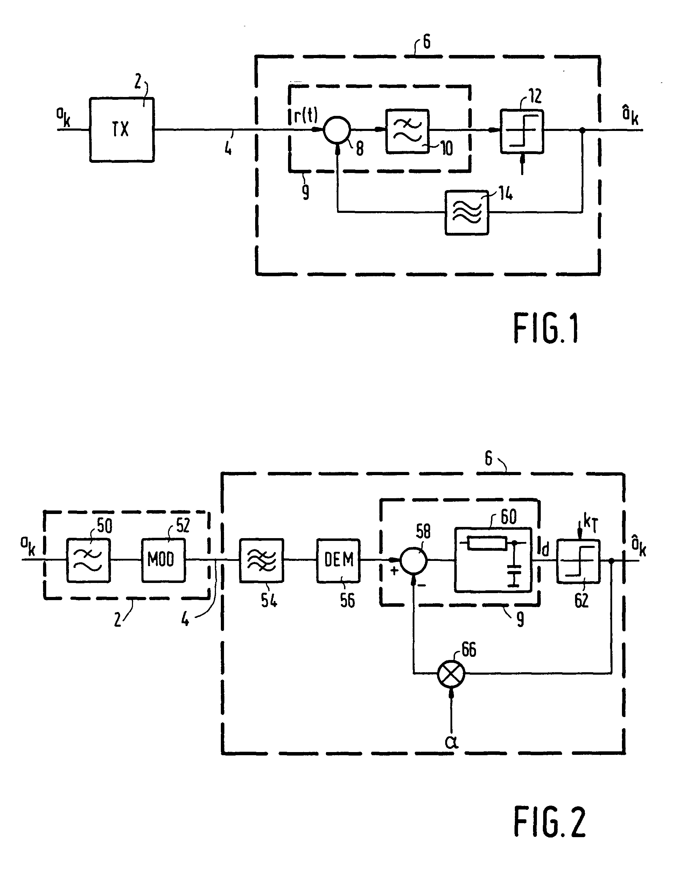

In the transmission system shown in Fig. 1 the transmit symbol values $a_k$ are supplied to a transmitter 2. An output of the transmitter 2 is coupled to an input of a channel 4.

An output of the channel 4 is connected to an input of a receiver 6.

The input of the receiver 6 is connected to a first input of determining means 9 for determining the detection signal. An output of the determining means 9 for determining the detection signal is connected to an input of the detector 12. The output of the detector 12 forms the output of the receiver 6 and is also connected to an input of the feedback means which in this case comprise a feedback filter 14. The output of the feedback filter 14 carrying the feedback signal for its output signal is connected to a second input of the determining means for determining the detection signal.

The first input of the determining means for determining the detection signal is formed by a first input of the subtracter circuit 8, the second input of the determining means for determining the detection signal being formed by a second input of the subtracter circuit 8. The output of the subtracter circuit 8 is connected to an input of the predetection filter 10. The output of the predetection filter 10 forms the output of the determining means for determining the detection signal.

In the transmitter 2 the presented symbol values $a_k$ are converted into pulses suitable for being transferred through the channel 4. They may be, for example, so-termed full response pulses in which case each symbol $a_k$ is represented by a single pulse, but it is alternatively conceivable that so-termed partial response pulses are used in which case each symbol $a_k$ is represented by more than one pulse.

The subtracter circuit 8 subtracts the feedback signal coming from the feedback filter 14 from the received signal r(t). The predetection filter 10 derives the detection signal from the output signal of the subtracter circuit 8. The transfer function of the predetection filter is selected such that the series of instantaneous values of the noise component on the input of the detector 12 at the decision instants of this detector 12 is a white noise signal, whereas the transfer of the feedback filter 14 is determined by the intersymbol interference introduced by the channel 4. The dimensioning of the predetection filter 10 and the feedback filter 14 will be further discussed in embodiments of the invention to be explained hereinafter.

In the transmission system shown in Fig. 2 the transmit symbol values are supplied as NRZ pulses to an input of a send filter 50. The output of the send filter 50 is connected to an input of an FM modulator 52. The output of the FM modulator 52 also forms the output of the transmitter 2 and is connected to the input of the channel 4. The output of the channel 4 is connected to an input of the receiver 6.

In the receiver 6 the input signal of the receiver is applied to a bandpass filter 54. The output of the bandpass filter 54 is connected to the input of an FM demodulator 56. The output of the FM demodulator 56 is connected to a first input of a subtracter circuit 58. The output of the subtracter circuit 58 is connected to a first input of the predetection filter in this case being an analog first-order low-pass filter 60. The output of the low-pass filter 60 is connected to an input of a detector 62. The determining means for determining the detection signal are formed by the subtracter circuit 58 and the low-pass filter 60. The output of the detector is connected to a first input of a multiplier circuit 66. A second input of the multiplier circuit 66 is supplied with a constant value $\alpha$. The output of the multiplier circuit 66 is connected to a second input of the subtracter circuit 58. The feedback means are formed here by the multiplier circuit 66.

In the transmitter 2 the NRZ pulses representing the symbol values $a_k$ are filtered by the send filter 50. This filter is a 5th order Bessel filter having a cut-off frequency equal to half the symbol frequency. This filter limits the bandwidth of the transmit signal. In the FM modulator 52 the output signal of the send filter 50 is modulated on a carrier by means of frequency modulation. The frequency rotation of the FM signal is equal to $0.35 \cdot f_s$, where $f_s$ is the symbol frequency, which leads to a modulation index $\eta$ of 0.5. The send filter has by approximation a Gaussian transfer function, so that the transmitted signal is a GMSK (Gaussian Minimum Shift Keying) signal by approximation.

In the receiver 6 the received signal is filtered by the bandpass filter 54. This bandpass filter has a bandwidth of $1.8 \cdot f_s$ and has a transfer characteristic obtained by low-pass/bandpass transformation of a 5th order Bessel filter. The FM signal is demodulated by the FM demodulator 56 after which the difference between the output signal of the FM demodulator 56 and the feedback signal is filtered by the low-pass filter 60. The low-pass filter 60 has a cut-off frequency of $0.05 \cdot f_s$. On the output of the filter 60 the detection signal is available. As the output signal of the FM demodulator 56 contains a noise component having a power spectrum quadratically increasing with frequency (up to a certain maximum frequency), and the low-pass filter 60 has a power transfer function which, above the cut-off frequency, quadratically decreases with frequency, a detection signal having a substantially white noise component is obtained on the input of the detector 62 (also up to a certain maximum frequency).

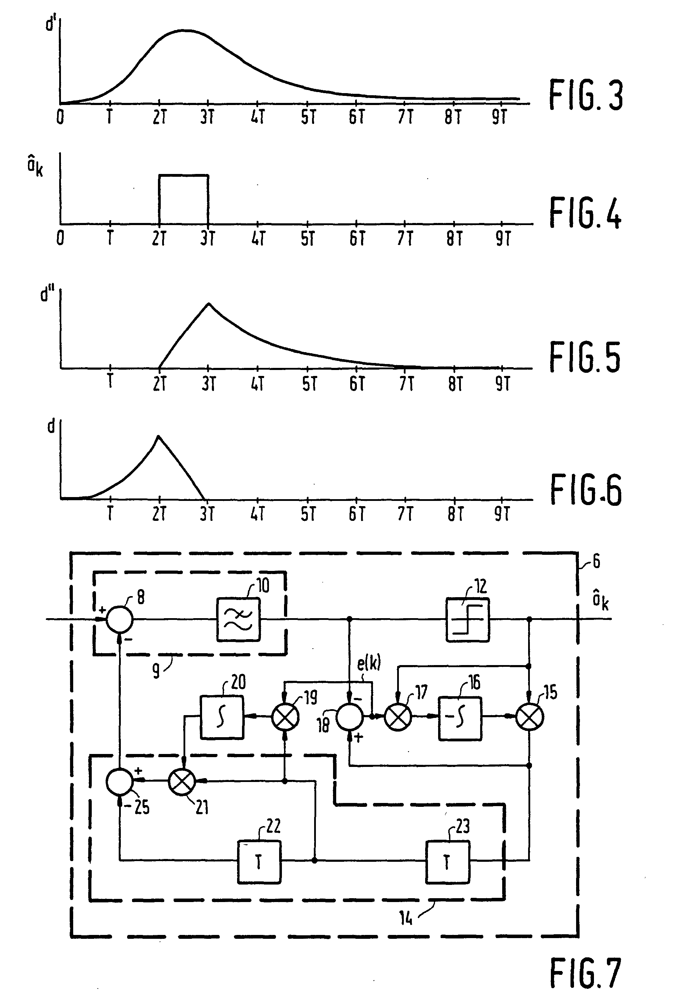

Fig. 3 shows plotted against time the contribution of a single received pulse on the input of the receiver to the detection signal. It is clearly visible from this curve that the low-pass filter 60 introduces a considerable quantity of intersymbol interference. The detector 62 makes decisions at instants k.T about the symbol values received at these instants. This symbol value is retained on the output of detector 62 for a period of time T. The output signal of the detector 62 caused by the pulse shown in Fig. 3 is shown in Fig. 4. This output signal is also applied to the low-pass filter 60 *via* the multiplier circuit 66 and the subtracter circuit 58. The contribution of the output symbol $\hat{a}_k$ of the detector to the output signal of the low-pass filter 60 is shown in Fig. 5. The final detection signal will be equal to the difference between the signals shown in Fig. 3 and Fig. 5. This detection signal is shown in Fig. 6. The value of $\alpha$ is to be selected such that the signals shown in Figs. 3 and 5 cancel each other for instants $t \geq 3T$. This cancellation is possible because the pulse shown in Fig. 3 for instants $t \geq 3T$ can be approximated as an exponential function of time. Since the contribution of the output signal of the detector to the detection signal from $t \geq 3T$ is also a similar, but time shifted, exponential function, an exact scaling by $\alpha$ may provide that the values of the two exponential functions are made equal for $t \geq 3T$. As a result, an ideal compensation is possible for the intersymbol interference introduced by the low-pass filter. For thus compensating for the intersymbol interference caused by channel 4 and the low-pass filter 60, the following should generally hold:

$$(h*w)\,(t) - (g*w)\,(t\text{-}mT) = 0 \quad t \geq mT \tag{1}$$

Herein h is the impulse response of the channel, w the impulse response of the prediction filter, g the impulse response of the feedback means, T the symbol period, * the convolution operator and m the number of samples of the impulse response of the channel utilized for the detection of the symbol value $\hat{a}_k$. If the channel impulse response may be approximated by $\delta(t)$, **(1)** changes into:

$$w(t) - (g*w)\,(t\text{-}mT) = 0 \quad t \geq mT \tag{2}$$

If w(t) is an exponential function $c \cdot e^{-t/\tau} \cdot U(t)$, and g(t) is causal, **(2)** changes into:

$$ce^{-\frac{t}{\tau}} - c \int_0^{t-mT} g(\theta)\, e^{\frac{t-mT-\theta}{\tau}}\, d\theta = 0 \quad t \geq mT \tag{3}$$

**(3)** may be elaborated into:

$$\int_{-0}^{t-mT} g(\theta)\, e^{\frac{\theta}{\tau}} d\theta = e^{-\frac{mT}{\tau}} \qquad\qquad (4)$$

From **(4)** can be noticed that the solution g(t) = e^{-mT/τ}·δ(t) satisfies **(4).** This means that the constant factor $\alpha$ in the feedback means 66 is to be equal to e^{-mT/τ}. If the detector 62 comprises a comparator, the value of m will be equal to 1, but if a Viterbi detector is used, m may advantageously be selected to be greater than 1 because the Viterbi detector can then utilize part of the energy in the trailing part of the impulse response of the low-pass filter 60.

In the receiver 6 shown in Fig. 7 the input signal is applied to the determining means 9 for determining the detection signal. The output of the determining means 9 for determining the detection signal is connected to an input of the detector 12 and to a first input of a subtracter circuit 18. The output of the detector 12 forms the output of the receiver and is also connected to an input of a multiplier circuit 17 and to an input of the multiplier circuit 15. The output of a multiplier circuit 15 is connected to a second input of the subtracter circuit 18 and to an input of a delay element 23 which has a delay T. The output of the delay element 23 is connected to a first input of a multiplier circuit 19, a first input of a multiplier circuit 21 and an input of a delay element 22. The output of the delay element 22 is connected to the first input of a subtracter circuit 25. The output of the subtracter circuit 25 is connected to a second input of the determining means 9 for determining the detection signal. The feedback means are formed by the delay elements 22 and 23 and by the multiplier circuit 21 and the subtracter circuit 25.

The output of the subtracter circuit 18 is connected to a second input of the multiplier circuit 17 and to a second input of the multiplier circuit 19. The output of the multiplier circuit 17 is connected to an input of an inverting integrator 16 whose output is connected to a second input of the multiplier circuit 15.

The output of the multiplier circuit 19 is connected to an input of an integrator 20. The output of the integrator 20 is connected to a second input of the multiplier circuit 21. The output of the multiplier circuit 21 is connected to a second input of the subtracter circuit 25.

The receiver shown in Fig. 7 is arranged for a channel which has a so-termed class-IV partial response transfer. For the discrete-time impulse response of this channel there may be written for a sampling period equal to the symbol interval q(k) = δ(k)-δ(k-2), where δ(k) is the Kronecker delta function. Assuming that the noise component in the input signal of the receiver quadratically increases with frequency, which is often the case in magnetic recording channels, a first-order low-pas filter may be selected for the predetection filter 10 so as to obtain a detection signal whose available noise component is white.

For the discrete-time impulse response of the predetection filter 10 the following holds then:

$$w(k) = (1 - \alpha)^{k} \cdot U(k) \qquad\qquad (5)$$

In **(5)** $\alpha$ is a measure for the time constant of the low-pass filter and u(k) is the unit step function which is equal to 0 for k < 0 and equal to 1 for k ≥ 0. For the discrete-time impulse response q'(k) of the combination of channel and predetection filter there is then found:

$$q'(k) = (1-\alpha)^{k} \cdot U(k) - (1-\alpha)^{k-2} \cdot U(k-2) \qquad\qquad (6)$$

From the impulse response of **(6)** all the values for k > 0 are to be eliminated by the combination of the feedback filter 14 and the predetection filter 10. The impulse response of the combination of the feedback filter 14 and the predetection filter 10 is then to be equal to:

$$h'(k) = (1-\alpha)^{k} \cdot U(k-1) - (1-\alpha)^{k-2} \cdot U(k-2) \qquad\qquad (7)$$

**(7)** may also be written as:

$$h'(k) = (1-\alpha)\cdot(1-\alpha)^{k-1} \cdot U(k-1) - (1-\alpha)^{k-2} \cdot U(k-2) \qquad\qquad (8)$$

**(8)** may be considered the response of the predetection filter 10 to a signal equal to:

$$f(k) = (1-\alpha)\cdot\delta(k-1)-\delta(k-2) \qquad (9)$$

This means that the discrete-time impulse response h(k) of the feedback filter is to be equal to $(1-\alpha)\cdot\delta(k-1) - \delta(k-2)$.

If the predetection filter 10 is arranged as a discrete-time filter and also the amplitude of the input signal of the subtracter circuit 8 is known accurately (for example, by applying an AGC amplifier), the coefficient of the multiplier circuit 21 may simply be selected equal to $1-\alpha$. If the predetection filter 10 is arranged as an analog filter, or if the amplitude of the input signal of the subtracter circuit 8 is not known accurately, the constant $\alpha$ is not known accurately either. In that case it is desirable to arrange the feedback filter as an adaptive filter which determines the correct value of the multiplying coefficient from the detection signal and the detected symbols. In the receiver 6 shown in Fig. 7 the feedback filter is arranged as an adaptive version. In addition, the receiver comprises an adaptive system to have the receiver operate correctly with different amplitudes of the detection signal.

There is assumed that on the input of the delay element 23 a reconstructed detection signal is present representing the detected symbol values and having an amplitude equal to the amplitude of the detection signal. On the output of the subtracter circuit 18 there is a signal present which is proportional to the difference between the reconstructed detection signal and the current detection signal. By means of multiplier circuit 19 the correlation is determined between the difference signal e(k) and the value of the reconstructed detection signal. If the coefficient $(1-\alpha)$ has a correct value, the correlation value between the difference signal e(k) and the reconstructed detection signal will be equal to zero. The output signal of the integrator 20 which represents the value of $(1-\alpha)$ continues to keep its actual value. If the value of $(1-\alpha)$ is too small, the intersymbol interference introduced by the predetection filter 10 is then compensated for only in part by the feedback signal. There is then a correlation between the difference signal e(k) and the reconstructed detection signal â'(k-1). The output signal of the multiplier circuit 19 is a measure for this correlation. With too small a value of (1-a), the output signal of the multiplier circuit 19 will be positive on average. As a result, the output signal of the integrator will increase until the correlation value between e(k) and the reconstructed detection signal is equal to zero.

If the value of $(1-\alpha)$ is too large, the intersymbol interference introduced by the predetection filter is overcompensated by the feedback filter. There is then also a correlation between the difference signal e(k) and the reconstructed detection signal. With too large a value of $(1-\alpha)$ the output signal of the multiplier circuit 19 will be negative on average. As a result, the output signal of the integrator will diminish until the correlation value between e(k) and the reconstructed detection signal is equal to zero.

With the aid of the multiplier circuit 15 a reconstructed detection signal is formed from the detected symbols $â_k$ with the aid of the output signal of the inverting integrator 16. In the ideal situation the amplitude of the reconstructed detection signal is equal to the amplitude of the actual detection signal. By means of the subtracter circuit 18 the difference is found between the reconstructed detection signal and the actual detection signal. By means of the multiplier circuit 17 the difference signal e(k) is multiplied by the detection signal, so that an error signal is available on the output of the multiplier circuit, which signal is a measure for the difference between the amplitude of the reconstructed detection signal and the actual detection signal, irrespective of the sign of the detection signal. If the amplitude of the reconstructed detection signal is too large, the output signal of the multiplier circuit 17 is positive. As a result, the output signal of the inverting integrator 16 will diminish until the average value of the error signal is equal to zero. If the amplitude of the reconstructed detection signal is too small, the output signal of the multiplier circuit 17 is negative. As a result, the output signal of the inverting integrator 16 will increase until the average value of the error signal is equal to zero. There should be observed that it is alternatively possible to use an AGC control *in lieu of* the control carried out by the subtracter circuit 18, the multiplier circuit 17, the integrator 16 and the multiplier circuit 15. The amplitude of the input signal of the subtracter circuit 8 is then controlled to a desired value.

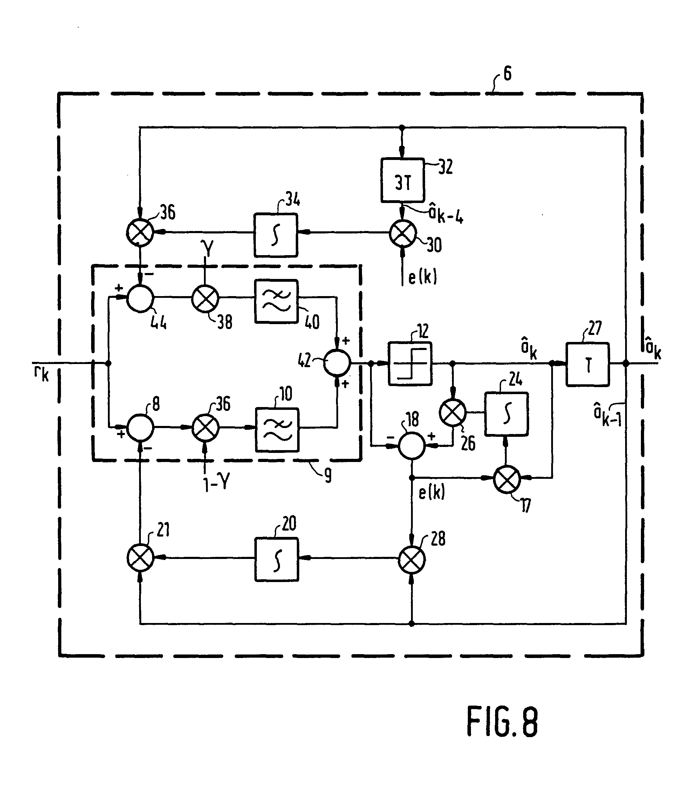

In the receiver shown in Fig. 8 the input signal of the receiver 6 is applied to a first input of a subtracter circuit 8 and to a first input of a subtracter circuit 44. The output of the subtracter circuit 44 is connected to a first input of a multiplier circuit 38. A second input of the multiplier circuit 38 is supplied with a constant $\gamma$. The output of the multiplier circuit 38 is connected to a first sub-predetection filter 40. The output of the first sub-predetection filter 40 is connected to a first input of an adder circuit 42. The output of the subtracter circuit 8 is connected to a first input of a multiplier circuit 36. A second input of the multiplier circuit 36 is supplied with a constant $1-\lambda$. The output of the multiplier circuit 36 is connected to a second sub-predetection filter 10. The output of the second sub-predetection filter 10 is connected to a second input of the adder circuit 42. The determining means 9 for determining the detection signal are formed in this case by the subtracter circuits 8 and 44, the multiplier circuits 36 and 38, the sub-predetection filters 10 and 40 and the adder circuit 42.

The output of the adder circuit 42 is connected to an input of the detector 12 and to a first input of the subtracter circuit 18. The output of the detector 12 is connected to a first input of a multiplier circuit 17, a first input of a multiplier circuit 26, an input of a delay element 27 and to the output of the receiver 6. The output of the delay element 27 is connected to an input of a delay element 32, to an input of a multiplier circuit 36, an input of a multiplier circuit 28 and to an input of a multiplier circuit 21.

The output of the multiplier circuit 36 is connected to a second input of the subtracter circuit 44. The output of the multiplier circuit 21 is connected to a second input of the subtracter circuit 8. The output of the multiplier circuit 26 is connected to a second input of the subtracter circuit 18. The output of the subtracter circuit 18, carrying e(k) for its output signal, is connected to a second input of the multiplier circuit 17 and to a second input of the multiplier circuit 28. The output of the multiplier circuit 17 is connected to an input of an inverting integrator 24. The output of the inverting integrator 24 is connected to a second input of the multiplier circuit 26.

The output of the multiplier circuit 28 is connected to an input of an integrator 20. The output of the integrator 20 is connected to a second input of the multiplier circuit 21.

The receiver shown in Fig. 8 is arranged to receive a channel having a so-termed bipolar transfer. For the discrete-time impulse response q(k) of this channel, there may be written for a sampling period equal to the symbol interval: $q(k) = \delta(k)-\delta(k-1)$, where $\delta(k)$ is the Kronecker delta function. If the predetection filter has a second-order low-pas characteristic, the following may be written for the discrete-time impulse response of the predetection filter:

$$w(k) = \gamma(1-\alpha)^k + (1-\gamma) (1-\beta)^k \tag{10}$$

In **(10)** $\alpha$ and $\beta$ are measures for the two time constants of the second-order low-pass filter and $\gamma$ is a constant greater than 0 and smaller than 1. For the discrete-time impulse response of the combination of the channel and the predetection filter, the following is then found:

$$q''(k) = \{\gamma(1-\alpha)^k + (1-\gamma) (1-\beta)^k\} \cdot U(k) - \{\gamma(1-\alpha)^{k-1} + (1-\gamma) (1-\beta)^{k-1}\} \cdot U(k-1) \tag{11}$$

From the impulse response according to **(11)**, all the values for k > 0 are to be eliminated by the combination of the feedback means and the predetection filter. The impulse response of this combination is then to be equal to:

$$h''(k) = \{\gamma(1-\alpha)^k + (1-\gamma) (1-\beta)^k - \gamma(1-\alpha)^{k-1} - (1-\gamma) (1-\beta)^{k-1}\} \cdot U(k-1) \tag{12}$$

**(12)** may also be written as:

$$h''(k) = -\gamma \cdot \alpha(1-\alpha)^{k-1} \cdot U(k-1) - (1-\gamma) \cdot \beta(1-\beta)^{k-1} \cdot U(k-1) \tag{13}$$

If the second-order low-pass filter is realized by a parallel circuit of a first low-pass filter having a time constant determined by $\alpha$ and a second low-pass filter having a time constant determined by $\beta$, the impulse response can be realized according to **(13)** by utilizing two feedback filters. In that case the output signal of a first feedback filter is subtracted from the input signal of the first low-pass filter, and the output signal of the second feedback filter is subtracted from the input signal of the second low-pass filter. The impulse response of the first feedback filter is then to be equal to $\alpha \cdot \delta(k-1)$, and the impulse response of the second feedback filter is then to be equal to $\beta \cdot \delta(k-1)$.

If both the sub-predetection filters 10 and 40 and the feedback filters are arranged as digital filters, the values of $\alpha$ and $\beta$ and $\gamma$ can be set to a fixed value.

If the sub-predetection filters 10 and 40 are arranged as analog filters, it may be necessary to arrange the feedback filters as adaptive filters to be able to compensate for the inaccuracies of the values of $\alpha$ and $\beta$ in the analog sub-predetection filters 10 and 40. There is then assumed that the sub-predetection filter 10 has a relatively small time constant and that the sub-predetection filter 40 has a relatively large time constant.

For the adaptation of the feedback filter to the actual value of $\alpha$ and $\beta$, a difference signal e(k) is determined which represents a difference between a reconstructed detection signal and the actual detection signal. By means of the multiplier circuit 28 the correlation value between the symbol value â(k-1) and the difference signal e(k) is determined. This correlation value is equal to zero if the amplitude of the first feedback signal is correct. If the correlation value differs from zero, this error is integrated by the integrator 20, so that the amplitude of the first feedback signal is adapted in the right direction.

By means of the multiplier circuit 30 the correlation value between the symbol value â(k-4) and the difference signal e(k) is determined. This correlation value is equal to zero if the amplitude of the second feedback signal is correct. If the correlation value differs from zero, this error is integrated by the integrator 20, so that the amplitude of the first feedback signal is adapted in the right direction. Since the predetection filter 40 has a relatively large time constant, the contribution of the symbol â(k-4) to the difference signal e(k) will mainly be determined by the deviation of the amplitude of the second feedback signal. By determining the correlation value of the difference signal e(k) and the symbol value â(k) and adapting the amplitude of the second feedback signal with the aid of the integrator 34 in response to this correlation value, the correct value of the amplitude of the feedback signal is obtained without the first feedback signal disturbing the computation hereof. Neither has the second feedback signal any influence on the computation of the amplitude of the first feedback signal. A proviso for this is that the time constants of the two filters are sufficiently white apart. The control system formed by multiplier circuits 17 and 26, the subtracter circuit 18 and the integrator 24 provide that the average amplitude of the reconstructed detection signal continues to be equal to the average amplitude of the detection signal. This control circuit is identical with that of the receiver shown in Fig. 7.

In the receivers shown in Figs. 7 and 8 the predetection filters are not arranged adaptively. Needless to observe that it is possible to arrange the predetection filters adaptively to adapt the receiver to the properties of the noise component and/or the transfer function of the channel. This adaptivity may be based, for example, on the LMS criterion or the so-termed zero forcing criterion. The implementation of this adaptivity is based on the difference signal e(k).

There is observed that the receiver can be implemented completely in hardware, but it is alternatively possible for the receiver to be realised wholly or in part in a signal processor. In that case the signal processor is controlled by suitable software.

**Claims**

1. Transmission system which comprises a transmitter (2) for applying a signal representing digital symbols to a channel (4) and comprises a receiver (6) for receiving an output signal from the channel (4), which receiver (6) comprises determining means (9) for determining a detection signal from a combination of an auxiliary signal derived from the input signal of the receiver (6) and a feedback signal, a detector (12,62) for determining detected symbol values from the detection signal and feedback means (14,66) for determining the feedback signal from the detected symbol values, **characterized in that** the determining means (9) for determining the detection signal comprise a predetection filter (10,60) for deriving the detection signal from the combination of the auxiliary signal and the feedback signal.

2. Transmission system as claimed in Claim 1, **characterized in that** the predetection filter (10,60) comprises an analog filter.

3. Transmission system as claimed in Claim 1 or 2, **characterized in that** the predetection filter (10,60) comprises a filter having a fixed transfer function.

4. Transmission system as claimed in one of the Claims 1, 2 or 3, **characterized in that** the feedback means (14,66) comprise a feedback filter (14).

5. Transmission system as claimed in Claim 4, **characterized in that** the feedback filter (14) comprises an adaptive filter.

6. Transmission system as claimed in one of the preceding Claims, **characterized in that** the feedback means are arranged for producing at least two feedback signals, **in that** the determining means (9) for determining the detection signal comprise at least two parallel branches each of the branches being arranged for combining the auxiliary signal with one of the feedback signals, **in that** each of the branches comprises a sub-predetection filter (10,40) for filtering the combination of the auxiliary signal and the feedback signal concerned, and **in that** the determining means (9) for determining the detection signal comprise combining means (42) for combining the output signals of the branches to the detection signal.

7. Receiver (6) for receiving a signal representing digital symbols from a channel (4), which receiver (6) comprises determining means (9) for determining a detection signal from a combination of an auxiliary signal derived from an input signal of the receiver (6) and a feedback signal, a detector (12,62) for determining detected symbol values from the detection signal, and feedback means (14,66) for determining the feedback signal from the detected symbol values, **characterized in that** the determining means (9) for determining the detection signal comprise a predetection filter (10,60) for filtering the combination of the auxiliary signal and the feedback signal.

8. Receiver as claimed in Claim 7, **characterized in that** the predetection filter (10,60) comprises an analog filter.

**Patentansprüche**

1. Übertragungssystem, das einen Sender (2) zum Liefern eines Signals enthält, das digitale Symbole darstellt, zu einem Kanal (4), und das einen Empfänger (6) zum Empfangen eines Ausgangssignals von dem Kanal (4) enthält, wobei dieser Empfänger (6) Ermittlungsmittel (9) aufweist zum Ermitteln eines Detektionssignals aus eine Kombination eines Hilfssignals, das aus dem Eingangssignal des Empfängers (6) hergeleitet wird, und aus einem Rückkopplungssignal, einen Detektor (12, 62) zum Ermitteln detektierter Symbolwerte aus dem Detektionssignal und Rückkopplungsmittel (14, 66) zum Ermitteln des Rückkopplungssignals aus den detektierten Symbolwerten, **dadurch gekennzeichnet, dass** die Ermittlungsmittel (9) zum Ermitteln des Detektionssignals ein Vordetektionsfilter (10, 60) aufweisen zum Herleiten des Detektionssignals aus der Kombination des Hilfssignals und des Rückkopplungssignals.

2. Übertragungssystem nach Anspruch 1, **dadurch gekennzeichnet, dass** das Vordetektionsfilter (10, 60) ein analoges Filter umfasst.

3. Übertragungssystem nach Anspruch 1 oder 2, **dadurch gekennzeichnet, dass** das Vordetektionsfilter (10, 60) ein Filter mit einer festen Übertragungsfunktion umfasst.

4. Übertragungssystem nach einem der Ansprüche 1, 2 oder 3, **dadurch gekennzeichnet, dass** die Rückkopplungsmittel (14, 66) ein Rückkopplungsfilter (14) umfassen.

5. Übertragungssystem nach Anspruch 4, **dadurch gekennzeichnet, dass** das Rückkopplungsfilter (14) ein adaptives Filter umfasst.

6. Übertragungssystem nach einem der vorstehenden Ansprüche, **dadurch gekennzeichnet, dass** die Rückkopplungsmittel zum Erzeugen wenigstens zweier Rückkopplungssignale vorgesehen sind, dass die Ermittlungsmittel (9) zum Ermitteln des Detektionssignals wenigstens zwei parallele Zweige umfassen, wobei jeder der Zweige zum Kombinieren des Hilfssignals mit einem der Rückkopplungssignale vorgesehen ist, dass jeder der Zweige ein Teil-Vordetektionsfilter (10, 40) umfasst zum Filtern der Kombination aus dem Hilfssignal und dem betreffenden Rückkopplungssignal, und dass die Ermittlungsmittel (9) zum Ermitteln des Detektionssignals Kombiniermittel (42) umfassen zum Kombinieren der Ausgangssignale der Zweige zu dem Detektionssignal.

7. Empfänger (6) zum Empfangen eines Signals, das digitale Symbole darstellt aus einem Kanal (4), wobei dieser Empfänger (6) Ermittlungsmittel (9) umfasst zum Ermitteln eines Detektionssignals aus einer Kombination aus einem Hilfssignal, das von einem Eingangssignal des Empfängers (6) hergeleitet ist, und einem Rückkopplungssignal, einen Detektor (12, 62) zum Ermitteln detektierter Symbolwerte aus dem Detektionssignal, und Rückkopplungsmittel (14, 66) zum Ermitteln des Rückkopplungssignals aus den detektierten Symbolwerten, **dadurch gekennzeichnet, dass** die Ermittlungsmittel (9) zum Ermitteln des Detektionssignals ein Vordetektionsfilter (10,60) umfasst zum Filtern der Kombination des Hilfssignals und des Rückkopplungssignals.

8. Empfänger nach Anspruch 7, **dadurch gekennzeichnet, dass** das Vordetektionsfilter (10, 60) ein analoges Filter umfasst.

**Revendications**

1. Système de transmission qui comporte un émetteur (2) pour appliquer à un canal (4) un signal représentant des symboles numériques et qui comporte un récepteur (6) pour recevoir un signal de sortie en provenance du canal (4), ledit récepteur (6) comportant des moyens de détermination (9) pour déterminer un signal de détection à partir d'une combinaison d'un signal auxiliaire qui est dérivé à partir du signal d'entrée du récepteur (6) et d'un signal de rétroaction, un détecteur (12, 62) pour déterminer des valeurs de symbole détectées à partir du signal de détection et des moyens de rétroaction (14, 66) pour déterminer le signal de rétroaction à partir des valeurs de symbole détectées, **caractérisé en ce que** les moyens de détermination (9) pour déterminer le signal de détection comportent un filtre de prédétection (10, 60) pour dériver le signal de détection à partir de la combinaison du signal auxiliaire et du signal de rétroaction.

**2.** Système de transmission selon la revendication 1, **caractérisé en ce que** le filtre de prédétection (10, 60) comporte un filtre analogique.

**3.** Système de transmission selon la revendication 1 ou 2, **caractérisé en ce que** le filtre de prédétection (10, 60) comporte un filtre ayant une fonction de transfert fixe.

**4.** Système de transmission selon l'une quelconque des revendications précédentes 1, 2 ou 3, **caractérisé en ce que** les moyens de rétroaction (14, 66) comportent un filtre de rétroaction (14).

**5.** Système de transmission selon la revendication 4, **caractérisé en ce que** le filtre de rétroaction (14) comporte un filtre adaptatif.

**6.** Système de transmission selon l'une quelconque des revendications précédentes 1 à 5, **caractérisé en ce que** les moyens de rétroaction sont agencés pour produire au moins deux signaux de rétroaction, **en ce que** les moyens de détermination (9) pour déterminer le signal de détection comprennent au moins deux branches parallèles, chacune des branches étant agencée de manière à combiner le signal auxiliaire avec un des signaux de rétroaction, **en ce que** chacune des branches comporte un filtre de sous-prédétection (10, 40) pour filtrer la combinaison du signal auxiliaire et du signal de rétroaction concerné, et **en ce que** les moyens de détermination (9) pour déterminer le signal de détection comprennent des moyens de combinaison (42) pour combiner les signaux de sortie des branches avec le signal de détection.

**7.** Récepteur (6) pour recevoir d'un canal (4) un signal qui représente des symboles numériques, ledit récepteur (6) comportant des moyens de détermination (9) pour déterminer un signal de détection à partir d'une combinaison d'un signal auxiliaire qui est dérivé à partir d'un signal d'entrée du récepteur (6) et d'un signal de rétroaction, un détecteur (12, 62) pour déterminer des valeurs de symbole détectées à partir du signal de détection et des moyens de rétroaction (14, 66) pour déterminer le signal de rétroaction à partir des valeurs de symbole détectées, **caractérisé en ce que** les moyens de détermination (9) pour déterminer le signal de détection comportent un filtre de prédétection (10, 60) pour filtrer la combinaison du signal auxiliaire et du signal de rétroaction.

**8.** Récepteur selon la revendication 7, **caractérisé en ce que** le filtre de prédétection (10, 60) comporte un filtre analogique.

FIG.1

FIG.2

FIG.3

FIG.4

FIG.5

FIG.6

FIG.7

FIG.8